(19) Europäisches Patentamt

European Patent Office

Office européen des brevets

(11) **EP 1 034 355 B1**

(12) **EUROPEAN PATENT SPECIFICATION**

(45) Date of publication and mention
of the grant of the patent:
**01.02.2006 Bulletin 2006/05**

(51) Int Cl.:
*E21B 36/00* *(2006.01)*    *E21B 17/00* *(2006.01)*
*E21B 21/06* *(2006.01)*    *F16L 9/18* *(2006.01)*

(21) Application number: **97913332.9**

(22) Date of filing: **24.11.1997**

(86) International application number:
**PCT/GB1997/003218**

(87) International publication number:
**WO 1999/027228 (03.06.1999 Gazette 1999/22)**

(54) **TOOL COOLING SYSTEM**

WERKZEUGKÜHLUNG

SYSTEME POUR REFROIDIR UN OUTIL

(84) Designated Contracting States:
**DE GB GR IT**

(43) Date of publication of application:
**13.09.2000 Bulletin 2000/37**

(73) Proprietors:
• **Champness, Elwood**
**Bakersfield, CA 93305 (US)**
• **Champness, Al**
**Bakersfield, CA 93311 (US)**

(72) Inventors:
• **Champness, Elwood**
**Bakersfield, CA 93305 (US)**

• **Champness, Al**
**Bakersfield, CA 93311 (US)**

(74) Representative: **Powell, Stephen David et al**
**WILLIAMS POWELL**
**Morley House**
**26-30 Holborn Viaduct**
**London EC1A 2BP (GB)**

(56) References cited:
**WO-A-95/32355**          **WO-A-97/01017**
**CA-A- 1 191 454**        **GB-A- 1 246 385**
**US-A- 4 215 753**        **US-A- 4 287 957**
**US-A- 4 523 644**        **US-A- 5 715 895**

**Description**

The present invention relates to well bore fluid cooling systems and, more particularly, to heat exchange systems useful in cooling downhole tools in the course of drilling into geothermally heated strata.

The drilling of boreholes into the Earth's crust is a process in which cutting energy is expended at the downhole tool, the energy dissipation invariably raising the tool temperature. Along with the energy dissipation associated with drilling, the local temperature of the borehole increases with depth. The combination of the cutting tool temperature limit and the heat generated in the course of cutting, together with the increasing temperature profile in the borehole with depth, become the limiting factors on the effectiveness of the drilling process. Simply, the effective temperature difference at the tool end becomes insufficient for successful heat exchange of the locally generated cutting heat and the cutting process eventually reaches impractical rates, setting the limit of effective penetration.

In the past, drilling fluids were circulated through the drill pipe down to the tool, bringing back to the surface the cutting debris together with the entrained heat generated by cutting. As the depth increased, the heat exchange directly across the drill pipe wall required further chilling of the drilling fluid. This may be achieved, in one example, by a chilling system described in my prior U.S. Patent 4,215,753. Without limitation, the foregoing chilling system circulated the drilling fluids through heat exchangers at the surface and then circulated the chilled fluid down the wellbore. While commercially successful, the circulation path nonetheless entails long drill pipe dimensions and the consequential heat transfer from the returning fluid to the chilled fluid. This occurs across the pipe wall and becomes significant with increased bore depths.

Associated with increasing depth is also the pressure within the wellbore. In fact, the drilling fluid, sometimes referred to as the drilling mud, is often augmented with high mass particulate matter in suspension in order to equalize the local static pressure in the bore. Thus, the drill pipe is exposed to substantial pressures in a fluid that is entrained with cutting debris and high density augmentation matter. These combined conditions limit any usefulness of known insulation coatings, and the heat transfer across the drill pipe wall is thus determined by the pipe material.

In the past, various techniques have been devised which, in one way or another, insulate the well casing. Examples of such techniques may be found in the teachings of U.S. Patent 3,820,605 to Barber, et al; U.S. Patent 4,693,313 to Stephenson, et al; and U.S. Patent 4,276,936 to Mckinzie. While suitable for the purposes intended, each of the foregoing techniques fails to attend to the heat transfer rates across the drill pipe wall. The exchange between the chilled fluid pumped down the pipe and the returning fluid in the surrounding annulus of the bore is thus unattended.

Of those techniques directed at controlling the heat transfer to a downhole tool, it has been the typical practice to provide tool shielding, as in the U.S. Patent 5,016,716 to Donovan, et al, or to enclose the tool in a jacket, as in U.S. Patent 4,926,949 to Forrest. While these examples are effective for the purposes intended, the heat transfer across the drill pipe has again had little attention. It is the technique for increasing the effective R factor of the drill pipe itself that is addressed herein. The invention is particularly effective in the severe environments of deep well bores and those directionally angled, as in slant drilling.

Accordingly, it is the general purpose and object of the present invention to form a drill pipe structure for reduced heat transfer rates.

Other objects of the invention are to provide insulated drill pipe conformed for exposure in a well bore.

Yet further objects of the invention are to provide an insulated conveyance for chilled drilling fluids to a downhole tool.

Briefly, the above and other objects are accomplished within the present invention by providing a surface deployed heat exchanger, generally of the type earlier described in my U.S. Patent 4,215,753, including a fan cooled radiator exposed to a water misting array. The radiator is pump fed a flow of drilling mud from a local storage tank or pond, conveying its chilled output into the drill pipe string extending into a well bore. This flow of chilled drilling fluid is then useful in cooling the downhole tool.

Once significant depths are reached, however, the heat in the returning fluid surrounding the drill pipe exchanges with the chilled fluid conveyed down the pipe, and the fluid temperatures at the tool are too close to the local working temperature for effective cooling. This loss of cooling temperature difference is dominantly a function of the heat transfer rates across the drill pipe walls. The temperature differential becomes less as the length of the pipe string increase. Thus, in deep well drilling, the high length to diameter ratios of the pipe string preclude effective compensation by increased pumping rate.

Those skilled in the art will note that the downhole environment of the pipe string is extremely severe. The temperatures increase with depth, as does the pressure, and the well fluid is laden with cutting particulate and density enhancing matter in suspension. Any coating of the pipe segments to increase insulation coefficients is thus quickly abraded away, or collapsed by the well pressures. This destructive environment is further exacerbated by the common preference for slant drilling, now dictated by environmental and aesthetic concerns. Thus, pipe insulation by coating is a difficult object, limited by the material properties of the known insulative materials.

To provide insulative properties to the pipe string in these severe conditions, a pipe segment arrangement has been devised in which each segment is formed as a concentric dual wall cylinder. The annular space between the inner cylinder and the outer cylinder is then filled with a ceramic material such as silica granules or beads having an overall generally spherical shape, with the granule sizes determined by the well pressure to which the particular segment is exposed. The interstitial gaps between the granules can then receive an inert gas, at some pressure, to further oppose the collapse of the annular cavity between the walls.

Accordingly, those pipe segments closer to the well surface that are exposed to lower pressures may receive a coarser granular fill, as the wall bridging span between the granules can be greater. In this manner a selection of the segment filler granule size can be made for fewer wall-to-granule contacts, thereby increasing the insulative qualities of the segment. As the segments extend into deeper parts of the well bore, where the well pressure is greater, smaller granulation of the insulative fill offers smaller bridging spans to accommodate the higher pressure wall loadings, thus increasing crush resistance.

The segments are each terminated in the conventional threaded end connectors which also close the annular cavity. Thus, an assortment of segments is provided which meets the increasing pressure loads with bore depth. In each instance, the packed granular filler and the dual wall structure combine to increase the segment structural strength and some wall thickness reduction is therefore possible to reduce the string mass. The increased sectional rigidity of the segment, moreover, reduces the incidence of torsional buckling, an advantage of particular interest in slant drilling. Therefore, the insulation factor of each segment is increased by a multiple of 4 or more, while the structural strength is also increased.

The double wall construction also allows for higher internal drilling fluid pressures. This feature accommodates the use of downhole tools powered by the pumped drilling mud. The present inventive combination, therefore, accommodates the most rigorous concerns of deep well drilling.

Fig. 1 is a diagrammatic illustration of a drilling fluid cooling assembly provided with insulative drilling pipe segments, in accordance with the inventive combination described herein.

Fig. 2 is a sectional side view of a representative drill pipe segment useful with the invention herein.

Figs. 3a, 3b, and 3c are each sectional details illustrating the heat paths through a granular structural variety of annular pipe segment fill for use in accordance with the present invention.

Fig. 4 is a control signal diagram in accordance with the present invention.

Fig. 5 is a graphical illustration of a temperature profile along the well bore.

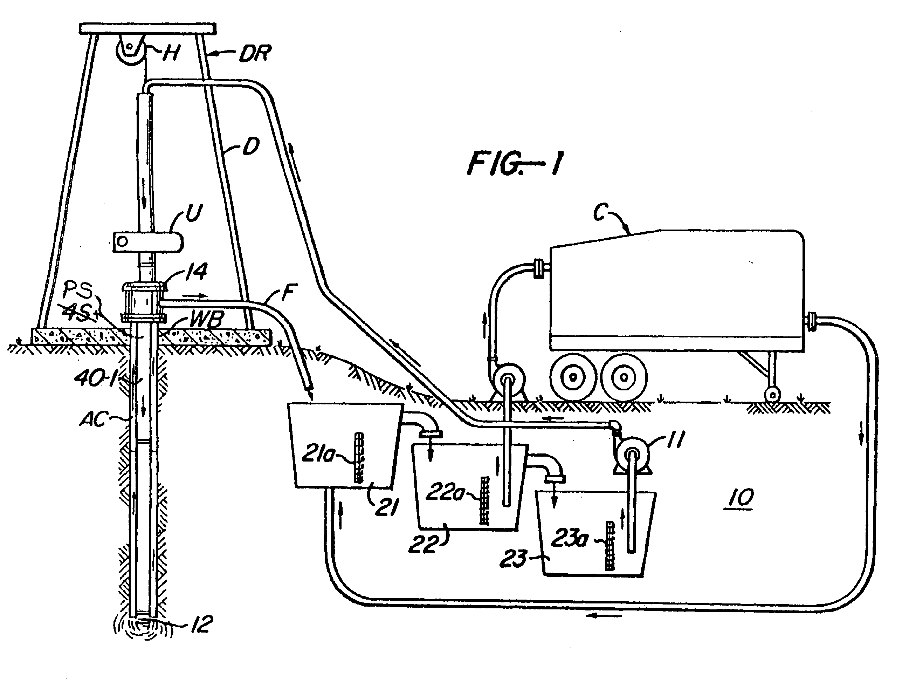

As shown in Figs. 1-5, inclusive, the inventive deep well drilling system, generally designated by the numeral 10, includes a drilling rig DR of conventional form provided with a derrick D, a hoist H, and a drive unit U to turn the drill pipe string PS within a well bore WB. Of course, in mud driven down hole motors, torsional power at the surface may be omitted. By common practice, drilling fluid or mud is conveyed to the exposed end of the string PS, by way of a mud pump 11. The fluid F passes to the cutting tool 12 at the lower end of the string. From there, it returns upwardly through the well bore to the well head 14. From the well head, it is directed into settling tanks 21, 22 and 23 in which the particulate cutting matter is separated.

A mobile chilling unit C, of the type earlier described in U.S. Patent 4,215,753, draws the separated drilling mud from the upper layers of tank 22, cooling same through misted heat exchangers and returning the cooled flow to tank 21. Tanks 21, 22, and 23 are provided with weirs 21a, 22a, and 23a, respectively, each conformed to collect the cuttings brought up from the well bore. The last stage of the settling and separating process, in tank 23, is then fed by pump 11 to the upper end of the pipe string PS.

The above arrangement both chills the drilling mud in chiller C and feeds it under pressure to the tool 12. Mud pressure operated down hole tools are, therefore, accommodated in the present system.

In typical practice, well bore WB is of a diameter greater than the pipe string PS, thus forming an annular cavity AC around the string. The drilling mud or fluid F emitted at the tool 12, will therefore pass to the surface in intimate contact with the pipe string PS. Heretofore, this intimate contact has resulted in substantial heat transfer from the returning flow to the chilled flow being forced down the string. As a result, the benefit of cooling has been limited as the drilling depths increased.

To increase the insulative qualities of the pipe string PS, an annular structure has been devised, generally exemplified by pipe segments 40-1, 40-2, and 40-3. Each of the segments 40-1, 40-2, and 40-3 is similar in its form, and like numbered parts describe like functioning structures.

More precisely, each segment includes a tubular exterior shell 41 provided with a coaxial interior liner 42. The shell 41 is separated from liner 42 by an annular space or cavity 43 within which a quantity of silica granules, aluminum oxide, or other insulative granules 45 is filled. The overall diameter of the granules may be graded so that segment 40-1 receives the largest granules 45-1, segment 40-2 receives the smaller granules 45-2, and so on.

Both the upper and lower ends of the annular cavity 43 are closed by pressed insertion of a circular projection 51 at each interior threaded couplings 50. This pressed engagement may be controlled to a selected pressure, thus prestressing the annulus against collapse. Once thus compressed, each threaded coupling 50 may be fixed in place by a parallel expanded method, and inert gas, under pressure, may be further introduced between the interstices of the granules 45 through threaded ports 85. This sealed and pressurized cavity then increases in its internal pressure with increasing gas temperature, opposing the well bore pressures in the surrounding fluid.

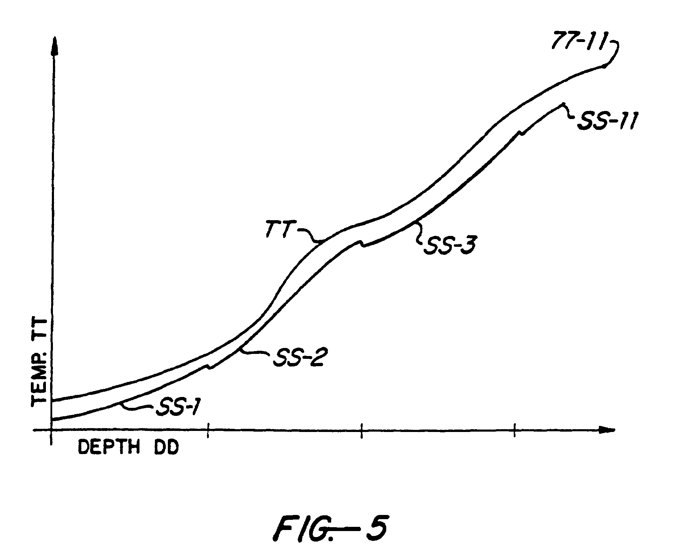

As illustrated in detail in Fig. 5 the typical well temperature profile TT increases with depth, as does the pressure. The inclusion of a confined quantity of gas in the annulus between the coaxial pipes will counteract wall collapsing exterior pressures.

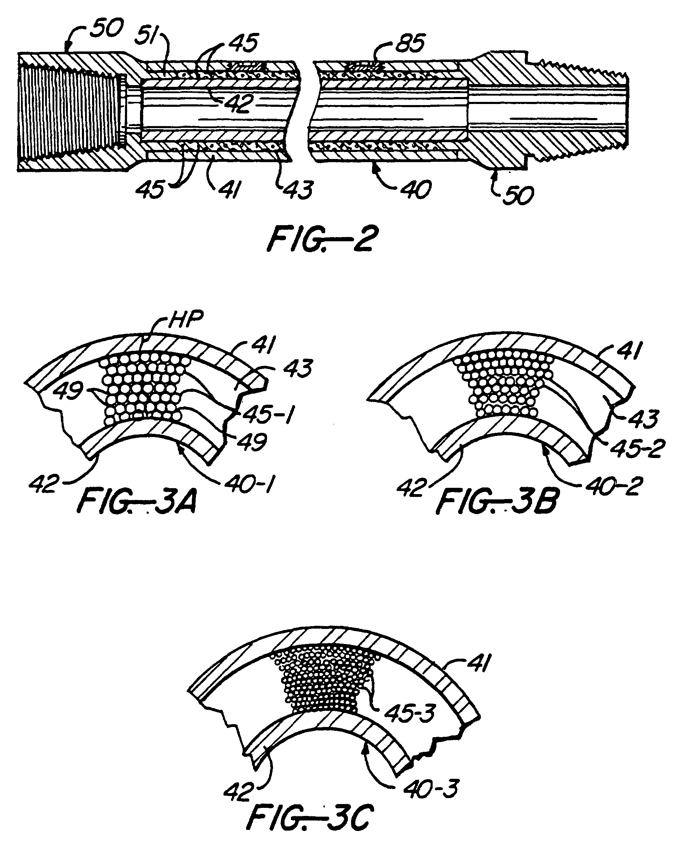

Further optimization may be effected by the selection of the granule size. As shown in Figs. 3a, 3b, and 3c, granules 45-1, 45-2, and 45-3 are each progressively smaller in dimension. The number of direct contacts 49 per unit surface area of the inner and outer concentric tubes 42 and 41, respectively, decreases in direct proportion to the granule size. The direct conductive heat exchange paths HP can thereby be controlled by the selection of the granule size, the wall thickness of the inner and outer tubes, and the type of materials be used.

The lower well pressures closer to the surface accommodate better the larger granule 45-1, and segment 40-1 can be installed in that part of the pipe string PS. As deeper insertions are contemplated, segments 40-2 or 40-3 can be installed. In each instance it is the intent to reduce the number of the direct contacts 49 where temperature differences between the downward flow and the return flow are the highest, avoiding the exponential paradox of conductive heat transfer. In this manner, a pipe string may be formed by connecting segments 40-1, 40-2, and 40-3, the combination of the selected segment types being determined by the cooling requirements of the tool, the downhole temperature, and the thermal profile of the well.

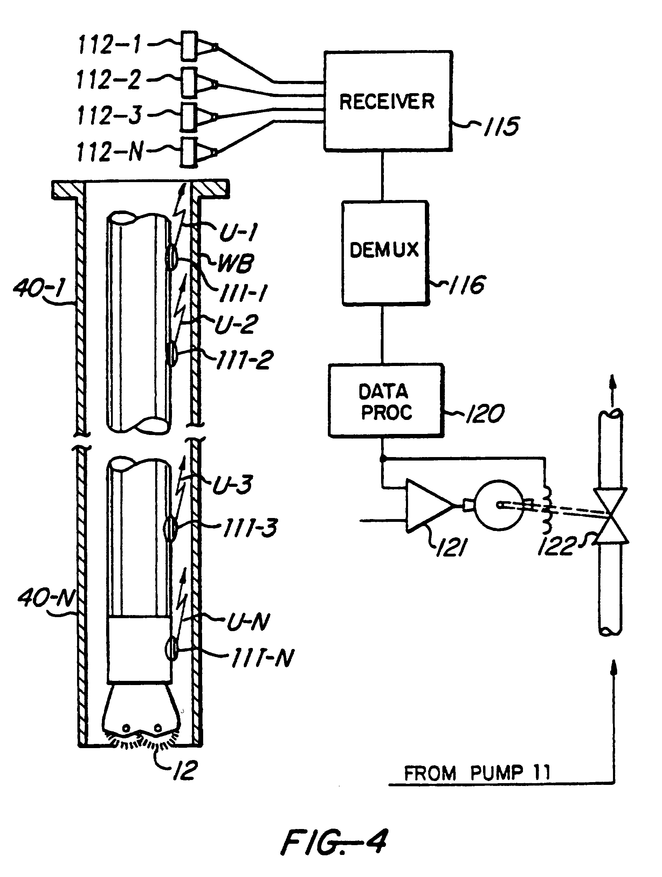

As shown in Fig. 4, the above input parameters may be sensed by an array of temperature sensors 111-1 to 111-N. Each sensor is connected to an ultrasonic encoding unit 112-1 to 112-N sending discretely coded ultrasonic signals U-1 to U-N up the well bore and through the drilling mud in the annulus surrounding the string. Signals U-1 to U-N are then received in a receiver stage 115 at the surface and, through a demultiplexer 116, are then fed to a data processing stage 120. It is this data processor that controls, through a servo loop 121 tied to a valve 122, the flow rate delivered by pump 11.

The data processing unit 120 may then be coded for the particular combination of segments 40-1, 40-2, and 40-3 and may then determine a weighted function set as follows

$$PR \;=\; \sum (U\text{-}1 * K1) + (U\text{-}2 * K2) + (U\text{-}3 * K3) +$$
$$(U\text{-}n * Kn) + \ldots$$

where the sum PR is the pump rate signal and Kl to Kn are the weighing coefficients determined by the ambient temperature in the well and the heat transfer rate of the segment. In this manner, the particular well temperature profile can be matched with the pumping rate and the transfer rates at each level.

As shown in Fig. 5, the temperature TT with depth DD is set out against the heat transfer slopes SS-1, SS-2, and SS-3 of the corresponding segments. Those skilled in the art will know that the heat transfer rate is an exponential function of the temperature difference, and by selecting a correct segment combination, the temperature difference at the tool 12 may be optimized. The foregoing arrangement, therefore, allows for a convenient matching of the array with the local heat gradient.

It will be appreciated that many modifications and variations can be effected. It is, therefore, intended that the scope of the instant invention be determined solely by the claims appended hereto.

**Claims**

1. Apparatus for cooling a downhole tool (12) inserted into a well bore (WB) at the end of a pipe string (PS), comprising:

   a cooling assembly (C) positioned on the ground surface adjacent said well bore (WB);
   storage structure mounted adjacent said well bore (WB) and conformed to receive well fluids (F) therein and connected to convey said well fluids (F) to said cooling assembly (C); a drilling rig supported over said well bore (WB);

pumping means (11) connected between said cooling assembly (C) and said pipe string (PS); **characterised in that**:

said pipe string (PS) comprises a plurality of pipe segments (40) each conformed as a dual walled coaxial structure defined by an interior tubular member (42) coaxially received within an exterior tubular member(41), said interior and exterior tubular members (42,41) being separated from each other to form an annular cavity (AC) therebetween, an upper threaded fitting (50) connected to the first end of said exterior member (41) and including a central opening conformed to receive the first end of said interior member (42) for parallel expansion thereof, a lower threaded fitting (50)connected to the second end of said exterior member (41) and including a central opening conformed to receive the second end of said interior member (42) for parallel expansion thereof; and,
a plurality of insulative granules (45) received within said annular cavity (AC).

2. Apparatus according to claim 1 further comprising:

temperature sensing (111) means deployed adjacent said tool (12) and said pipe string (PS);
logic means connected to receive signals from said temperature sensing means (111) corresponding to the temperatures sensed at said tool (12) and said pipe segments (40) for producing a control signal indicative of the combination thereof; and
control means connected to said pumping means (11) to receive said control signal for controlling the rate of said pumping means (11) in correspondence with said control signal.

3. Apparatus according to claim 2 wherein:

said granules (45) have an overall spherical dimension.

4. Apparatus according to claim 3 further comprising:

a port (85) formed in said exterior member for receiving inert gas under pressure.

5. Apparatus according to claim 1 wherein:

said upper fitting (50) of one of said segments (40) being conformed for threaded engagement with said lower fitting (50) of another one of said segments (40), said first end of said interior member (42) of said one segment (40) extending for compressive engagement with the second end of said interior member (42) of said another one of said segments (40).

6. Apparatus according to claim 5 further comprising:

temperature sensing means (111) deployed adjacent said tool and said pipe string;
logic means connected to receive signals from said temperature sensing means (111) corresponding to the temperatures sensed at said tool and said pipe segments (40) for producing a control signal indicative of the combination thereof; and
control means connected to said pumping means (11) to receive said control signal for controlling the rate of said pumping means (11) in correspondence with said control signal.

7. Apparatus according to claim 6 wherein:

said granules (45) have an overall spherical dimension.

8. Apparatus according to claim 7 further comprising:

a port (85) formed in said exterior member for receiving inert gas under pressure.

9. Apparatus according to claim 8 wherein:

said granules (45) are formed of a ceramic material.

**Revendications**

1. Appareil permettant de refroidir un outil de fond (12) inséré dans un puits de forage (WB) à l'extrémité d'un train de tiges (PS),
comprenant :

   un ensemble de refroidissement (C) positionné sur la surface du sol de manière adjacente audit puits de forage (WB) ;
   une structure de stockage installée de manière adjacente audit puits de forage (WB) et configurée pour recevoir des fluides de forage (F) à l'intérieur, et raccordée de manière à véhiculer lesdits fluides de forage (F) vers ledit ensemble de refroidissement (C) ;
   un appareil de sondage supporté au-dessus dudit puits de forage (WB) ;
   des moyens de pompage (11) raccordés entre ledit ensemble de refroidissement (C) et ledit train de tiges (PS) ;
   **caractérisé en ce que** :

   ledit train de tiges (PS) comprend une pluralité de segments de tiges (40), chacune étant configurée sous la forme d'une structure coaxiale à double paroi définie par un élément tubulaire intérieur (42) reçu coaxialement à l'intérieur d'un élément tubulaire extérieur (41), lesdits éléments tubulaires intérieur et extérieur (42, 41) étant séparés l'un de l'autre pour former une cavité annulaire (AC) entre ceux-ci, un ajustage fileté supérieur (50) étant raccordé à la première extrémité dudit élément extérieur (41) et incluant une ouverture centrale configurée pour recevoir la première extrémité dudit élément intérieur (42) pour la dilatation parallèle de celui-ci, un ajustage fileté inférieur (50) raccordé à la deuxième extrémité dudit élément extérieur (41) et incluant une ouverture centrale configurée pour recevoir la deuxième extrémité dudit élément intérieur (42) pour une dilatation parallèle de celui-ci ; et
   une pluralité de granules isolants (45) reçus à l'intérieur de ladite cavité annulaire (AC).

2. Appareil selon la revendication 1, comprenant en outre :

   des moyens détecteurs de température (111) déployés de manière adjacente audit outil (12) et audit train de tiges (PS) ; et
   des moyens logiques raccordés pour recevoir les signaux provenant desdits moyens détecteurs de température (111) correspondant aux températures détectées au niveau dudit outil (12) et desdits segments de tige (40) pour produire un signal de commande indiquant la combinaison de ceux-ci ;
   des moyens de commande raccordés auxdits moyens de pompage (11) pour recevoir ledit signal de commande permettant de réguler la vitesse desdits moyens de pompage (11) en fonction dudit signal de commande.

3. Appareil selon la revendication 2, dans lequel :

   lesdits granules (45) ont une dimension globale sphérique.

4. Appareil selon la revendication 3, comprenant en outre :

   un orifice (85) ménagé dans ledit élément extérieur pour recevoir du gaz inerte sous pression.

5. Appareil selon la revendication 1, dans lequel :

   ledit ajustage supérieur (50) de l'un desdits segments (40) est configuré de manière à venir en prise par filetage avec ledit ajustage inférieur (50) d'un autre desdits segments (40), ladite première extrémité dudit élément intérieur (42) dudit un segment (40) s'étendant de manière à venir en prise par compression avec la deuxième extrémité dudit élément intérieur (42) dudit autre desdits segments (40).

6. Appareil selon la revendication 5, comprenant en outre :

   des moyens détecteurs de température (111) déployés de manière adjacente audit outil et audit train de tiges ;
   des moyens logiques raccordés pour recevoir les signaux provenant desdits moyens détecteurs de température (111) correspondant aux températures détectées au niveau dudit outil et desdits segments de tige (40) pour produire un signal de commande indiquant la combinaison de ceux-ci ; et
   des moyens de commande raccordés auxdits moyens de pompage (11) pour recevoir ledit signal de commande permettant de réguler la vitesse desdits moyens de pompage (11) en fonction dudit signal de commande.

7. Appareil selon la revendication 6, dans lequel :

   lesdits granules (45) ont une dimension globale sphérique.

8. Appareil selon la revendication 7, comprenant en outre :

   un orifice (85) ménagé dans ledit élément extérieur pour recevoir le gaz inerte sous pression.

9. Appareil selon la revendication 8, dans lequel :

   lesdits granules (45) sont constitués d'un matériau céramique

**Patentansprüche**

1. Vorrichtung zum Kühlen eines Bohrwerkzeugs (12), das am Ende eines Rohrstranges (PS) in eine Brunnenbohrung (WB) eingeführt wird, mit:

   einer Kühlanordnung (C), die auf der Erdoberfläche benachbart zu der Brunnenbohrung (WB) positioniert ist;
   eine Vorratsstruktur, die benachbart zu der Brunnenbohrung (WB) befestigt ist und so aufgebaut ist, dass sie Brunnenfluide (F) in sich aufnimmt und
   zum Führen der Brunnenfluide (F) zu der Kühlanordnung (C) angeschlossen ist;
   eine Bohreinrichtung, die über der Brunnenbohrung (WB) aufgebaut ist;
   eine Pumpeinrichtung (11), die zwischen der Kühlanordnung (C) und dem Rohrstrang (PS) angeschlossen ist;

   **dadurch gekennzeichnet,**
   **dass** der Rohrstrang (PS) mehrere Rohrsegmente (40) aufweist, welche jeweils als doppelwandige Koaxialstrukturen ausgebildet sind, die von einem inneren rohrförmigen Element (42) gebildet werden, das koaxial innerhalb eines äußeren rohrförmigen Elementes (41) aufgenommen ist, wobei die inneren und äußeren rohrförmigen Elemente (42, 41) voneinander getrennt sind, um einen ringförmigen Hohlraum (AC) zwischen sich auszubilden, ein oberes mit einem Gewinde versehenes Anschlussstück (50), das mit dem ersten Ende des äußeren Elementes (41) verbunden ist und eine zentrale zum Aufnehmen des ersten Endes des inneren Elementes (42) zu dessen paralleler Expansion angepasste Öffnung einschließt, ein unteres mit einem Gewinde versehenes Anschlussstück (50), das mit dem zweiten Ende des äußeren Elementes (41) verbunden ist und eine zentrale zum Aufnehmen des zweiten Endes des inneren Elementes (42) für dessen parallele Expansion angepasste Öffnung einschließt; und mehrere innerhalb des ringförmigen Hohlraumes (AC) aufgenommene isolierende Granulate (45).

2. Vorrichtung nach Anspruch 1, außerdem aufweisend:

   eine Temperaturfühlereinrichtung (111) benachbart zu dem Werkzeug (12) und dem Rohrstrang (PS);
   eine Logikeinrichtung, die zum Empfangen von Signalen von der Temperaturfühlereinrichtung (111) angeschlossen ist, die den an dem Werkzeug (12) und den Rohrsegmenten (40) abgefühlten Temperaturen entsprechen, und zum Erzeugen eines auf deren Kombination hinweisenden Steuersignals; und
   eine an die Pumpeinrichtung (11) zum Aufnehmen des Steuersignals zum Steuern der Geschwindigkeit der Pumpeinrichtung (11) entsprechend dem Steuersignal angeschlossene Steuereinrichtung.

3. Vorrichtung nach Anspruch 2, in welchem:

   die Granulate (45) eine insgesamt kugelförmige Abmessung besitzen.

4. Vorrichtung nach Anspruch 3, außerdem aufweisend:

   einen Anschluss (85), der in dem äußeren Element zum Empfangen von inertem Gas unter Druck ausgebildet ist.

5. Vorrichtung nach Anspruch 1, in welchem:

das obere Anschlussstück (50) von einem der Segmente (40) für einen Gewindeeingriff in das untere Anschlussstück (50) von einem anderen der Segmente (40) ausgebildet ist, wobei das erste Ende des inneren Elementes (42) von dem einen Segment (40) sich zu einem Druckeingriff mit dem zweiten Ende des inneren Elements (42) des anderen der Segmente (40) erstreckt.

6. Vorrichtung nach Anspruch 5, außerdem aufweisend:

eine Temperaturfühlereinrichtung (111) benachbart zu dem Werkzeug und dem Rohrstrang;
eine Logikeinrichtung, die zum Empfangen von Signalen von der Temperaturfühlereinrichtung (111) angeschlossen ist, die den an dem Werkzeug und den Rohrsegmenten (40) abgefühlten Temperaturen entsprechen, und zum Erzeugen eines auf deren Kombination hinweisenden Steuersignals; und
eine an die Pumpeinrichtung (11) zum Aufnehmen des Steuersignals zum Steuern der Geschwindigkeit der Pumpeinrichtung (11) entsprechend dem Steuersignal angeschlossene Steuereinrichtung.

7. Vorrichtung nach Anspruch 6, in welchem:

die Granulate (45) eine insgesamt kugelförmige Abmessung besitzen.

8. Vorrichtung nach Anspruch 7, außerdem aufweisend:

einen Anschluss (85) der in dem äußeren Element zum Empfangen von inertem Gas unter Druck ausgebildet ist.

9. Vorrichtung nach Anspruch 8, in welchem:

die Granulate (45) aus einem keramischen Material ausgebildet sind.

FIG—1

FIG.—2

FIG.—3A

FIG.—3B

FIG.—3C

FIG.-4

FIG.—5